Europäisches Patentamt

European Patent Office

Office européen des brevets

(11) Publication number: **0 082 079**
**B1**

(12) **EUROPEAN PATENT SPECIFICATION**

(45) Date of publication of patent specification: **16.04.86**

(21) Application number: **82402274.3**

(22) Date of filing: **13.12.82**

(51) Int. Cl.⁴: **C 03 C 15/00,** C 03 C 25/06,
C 03 C 17/30, B 01 D 15/08,
G 01 N 30/02

(54) **Process for etching and deactivating glass capillaries for chromatography.**

(30) Priority: **14.12.81 US 330343**
**14.12.81 US 330359**

(43) Date of publication of application:
**22.06.83 Bulletin 83/25**

(45) Publication of the grant of the patent:
**16.04.86 Bulletin 86/16**

(84) Designated Contracting States:
**DE FR GB IT NL**

(56) References cited:
**DE-A-2 313 073**
**US-A-3 782 915**
**US-A-4 042 359**

(73) Proprietor: **THE DOW CHEMICAL COMPANY**
**2030 Dow Center Abbott Road P.O. Box 1967**
**Midland, MI 48640 (US)**

(72) Inventor: **Nestrick, Terry John**
**508 George Street**
**Midland Michigan 48640 (US)**
Inventor: **Peters, THomas Lawrence**
**2200 Jenkins**
**Midland Michigan 48640 (US)**
Inventor: **Lamparski, Lester Leo**
**2754 K-Bar-L Drive**
**Midland Michigan 48640 (US)**

(74) Representative: **Peuscet, Jacques**
**3, Square de Maubeuge**
**F-75009 Paris (FR)**

Courier Press, Leamington Spa, England.

## Description

The present invention relates to chromatographic column glass capillaries of the wall coated open tubular (WCOT) type in which a stationary liquid phase is present as a thin film supported on the inner surface of the capillary. More specifically, the invention relates to an improved process for uniformly matte-etching (eroding) the inner surface of a glass capillary column to prepare the surface for deactivation and coating with stationary phase for chromatography. The process results in a uniform and a fine structured etch without resorting to the use of high temperature thermal reactions with, e.g., hydrogen fluoride gas.

Glass capillary columns have become increasingly important for use in chromatography due to significant advantages over metal. Of particular analytical importance is the relative catalytic inertness of glass, especially for high temperature chromatography.

It is known, however, that stationary phase coating procedures useful for metal capillaries seldom yield high efficiency glass capillary columns, or columns which are satisfactorily stable. To overcome these drawbacks, glass surface modifications and treatments have been extensively studied. Among these are surface roughening procedures which theoretically should yield greatly enhanced column efficiency and stationary phase film stability.

Among the closest of these prior art methods to the invention are those which use hydrogen fluoride reagent to attack the glass surface. In this respect, both gaseous and aqueous hydrogen fluoride have been used for surface roughening of glass capillary columns. Aqueous hydrogen fluoride, however, does not, as used in typical procedures, apply a matte-etch to borosilicate glass, and treatment of flint or soft glass capillaries by either gaseous or aqueous hydrogen fluoride is extremely difficult to control. These procedures, therefore, are not currently in widespread use.

A more commonly applied method is that which relies on the decomposition of ammonium bifluoride (or, e.g., a fluorinated ether) which is deposited in the capillary, the ends of the capillary sealed, and the capillary subsequently heated to 450°C to generate hydrogen fluoride gas. This procedure causes what is referred to as "silica whisker" formations on the inner surface of the glass. The major shortcomings of this method remain a lack of satisfactory uniformity, frequently in the form of too severe an etch for chromatography purposes. In addition, the high temperature reaction with hydrogen fluoride gas poses severe potential hazards and must be approached with extreme care. This latter procedure, for more details, is described in some depth by Onuska, J. of Chrom., 142 (1977), pp. 117—125.

Yet another surface roughening procedure for glass capillaries for chromatography uses 10— 20% aqueous potassium difluoride reactant which is added to the capillary bore, followed by rinsing with water to dissolve the reaction product ($K_2SiF_6$), thus producing an eroded or roughened surface texture. The resultant etch is often gradient in nature, however, and thus not satisfactorily uniform along the length of the column.

A new technique has now been discovered for improved etching of glass (borosilicate and soft glass) capillaries for chromatography which overcomes the deficiencies of the prior art. It is both much safer to practice, being conducted typically at ambient temperatures, and also is highly controllable. It thus results in an extremely uniform and reproducible matte-etching of the inner surface of the capillary producing a surface with more ideal properties for depositing a stationary phase.

More specifically, the present invention resides in a method for etching the inner surface of a glass capillary column for chromatography, and in preparation for deactivating and coating the inner surface of the capillary with stationary phase, comprising the steps of:

(a) flowing through the bore of the capillary a liquid etching solution of ammonium bifluoride dissolved in an organic solvent, said organic solvent being water miscible, able to dissolve a reactive amount of ammonium bifluoride ($NH_4HF_2$) and relatively unable to dissolve the reaction product ($NH_4)_2SiF_6$,

(b) continuing step (a) for a sufficient time to produce a frosted surface,

(c) thereafter adding a rinse solution of a liquid organic solvent to the bore of the capillary,

(d) without segmenting the flow of the rinse solution to the capillary, adding thereto water, thereby rinsing the capillary with a rinse solution of the liquid organic solvent mixed with water, and

(e) without segmenting the flow of the rinse solution to the capillary, reducing or terminating the addition of the organic solvent to produce a final liquid rinse of the capillary wherein the rinse solution is an effective amount of water sufficient to essentially completely remove the etchant reaction products adhering to the wall of the capillary to produce a uniformly and finely etched surface.

Glass column capillaries for chromatography, which are prepared by the inventive process, are generally between about 0.1—0.8 mm I.D. and from about 10—100 meters in length. They are suitably made of borosilicate (Pyrex®) or soda-lime (soft or flint) capillary glass stock.

A very important aspect of the invention in achieving a uniform matte-etch of the inner surface of these capillaries is the use of step (a) of the inventive process in which a self-limiting reaction of the glass is obtained by the selection of the proper etching reagent and its solvent. Because the reaction is of a self-limiting nature, it can be controlled and made highly uniform for the entire length of the bore of the capillary.

The critical properties of the organic solvent used in the invention is the solubility of a reactive amount of ammonium bifluoride, and relative insolubility to the reaction product $(NH_4)_2SiF_6$; and for the rinsing steps, the further property of being a water miscible solvent.

The organic solvent is selected from methanol, ethanol or mixtures of methanol and ethanol, or mixtures of the organic solvent and water. Most preferably, the organic solvent is methanol having little or no dissolved water present.

Other organic solvents having the above recited critical properties could be mixed with methanol, or substituted in the alternative to effectively practice the invention. Such alternative organic solvents are intended to be covered within the broad scope of the term organic solvent as herein defined. In addition, the organic solvent used herein may also incorporate small amounts of water in order to increase their polarity for dissolving a reactive amount of ammonium bifluoride. Hereinafter, the invention is particularly described with reference to the use of methanol as the most preferred solvent.

The liquid etching solution is prepared by dissolving preferably a saturated amount of ammonium bifluoride $(NH_4HF_2)$ in a dry methanol solvent to prepare a solution of about 4% (w/v) ammonium bifluoride in methanol.

The etching solution is added, e.g., from a suitable reservoir from which it is pushed by nitrogen or other inert gas through the bore of the capillary. Preferably ambient temperatures are used, although elevated temperatures below the boiling point of the methanol carrier may be alternatively employed. Generally, about 3—7 column volumes of etching solution are pushed slowly through the capillary for a prolonged period, e.g., 5—20 hours at flow rates of typically about 1—10 ml/hr.

Etching by this process produces as the reaction product $(NH_4)_2SiF_6$ which is insoluble in methanol and adheres to the glass surface, thereby limiting further reaction with the etching solution; and thus limiting the depth of the reacted layer. Upon completion of steps (a) and (b), the capillary exhibits a highly uniform and frosted surface over the entire length of the capillary bore (visible only in the dry capillary).

Following the etching step, the capillary is disconnected from the reservoir of etching solution, and connected preferably to a liquid chromatographic pump to complete the remaining rinsing steps (c), (d), and (e). Apparatus for practicing these steps comprises preferably a mixing vessel suitably of about 40 ml volume. The mixing vessel is connected by a switching valve to reservoirs of water and methanol, respectively. In practicing step (c) of the process, the mixing vessel is filled with methanol which is pumped slowly, suitably at a rate of from 0.5—1.0 ml/min, through the capillary bore. Typically, about 3—10 column volumes of dry methanol are passed through the capillary for an initial rinse period of about 0.5 to 3 hours. The methanol removes essentially all residual ammonium bifluoride reactant without detrimentally disturbing the adhered layer of $(NH_4)_2SiF_6$. Without segmenting the flow of the rinse solution to the bore of the capillary, the switching valve is manually turned to add water to the mixing vessel and terminate the flow of methanol. A mixture of methanol and water is thus produced within the mixing vessel which gradually is diluted to pure water as the vessel is emptied and additional water is added. The water/methanol rinse and later essentially pure water gradually dissolves and dislodges the $(NH_4)_2SiF_6$ reaction product. The slow graduation of flow from methanol to water in the rinse avoids capillary plugging with dislodged $(NH_4)_2SiF_6$ particles.

Generally about 3—10 column volumes of the methanol/water mixture, followed by 3—10 columns of pure water are pushed slowly through the column to obtain essentially complete removal of the $(NH_4)_2SiF_6$ reaction product. Following completion of this step, and drying with purified nitrogen, a uniform fine matte-etch is evident in the form of an easily perceptible opaqueness. Although the etch is very fine structured, no problems with air entrainment have been encountered (as with whisker columns) making the columns of the present invention particularly suitable for all standard coating procedures.

The final rinse step with essentially water is preferentially practiced using pure water to insure that the $(NH_4)_2SiF_6$ reaction product is entirely removed from the capillary surface. The term "essentially water" means in the broadest sense that there is a sufficient amount of water in the rinse to accomplish this removal. The rinse solution if other than pure water may contain ingredients other than as would detrimentally prevent this extraction from being carried to essential completeness.

The term "without segmenting" means the avoidance of detrimentally introducing air bubbles into the rinse solutions which would cause capillary plugging. In this respect, particles of $(NH_4)_2SiF_6$ dislodge and move forward with the rinse solution. If an air bubble is present, the particles can collect and eventually plug the capillary. Plugging can also occur if the transition from methanol to water is made too abruptly.

Example 1

A borosilicate capillary is first flushed with 5-column volumes of methanol followed by methylene chloride and then dried with purified nitrogen. Five column volumes of an etching solution of methanol saturated with ammonium bifluoride $(NH_4HF_2)$ are very slowly pushed through the column such that the total contact time is about 8 to 12 hours. The column is then rinsed with about 5-column volumes of methanol and about 5-column volumes of water/methanol solution according to the gradient rinse procedure described. A final rinse of about 5-columns of water is used. The rinse solutions are added slowly and without interruption over a prolonged rinse cycle of from 1 to 4 hours.

After drying, an etched surface is evident in the form of an easily perceptible opaqueness. A SEM photograph reveals the etch to be extremely uniform and fine structured. The depth of the etch ranges from 0.1 to 0.2 micron with a distance of about 10 micrometres between "peaks".

Example 2

A borosilicate capillary is first flushed with 5-column volumes of methanol followed by methylene chloride and then dried with purified nitrogen. Five column volumes of an etching solution of ethanol containing 10 percent by weight water saturated with ammonium bifluoride ($NH_4HF_2$) are very slowly pushed through the column such that the total contact time is about 8 to 12 hours. The column is then rinsed with about 5-column volumes of ethanol containing 10 percent by weight water and about 5-column volumes of water/ethanol solution according to the gradient rinse procedure described. A final rinse of about 5-columns of water is used. The rinse solutions are added slowly and without interruption over a prolonged rinse cycle of from 1 to 4 hours.

After drying, an etched surface is evident in the form of an easily perceptible opaqueness.

Column deactivation and coating of the etched column

Upon completion of the etching process, in supra, the capillary columns may be prepared for storage by rinsing with an organic solvent preferably methanol, followed by methylene chloride, and drying with purified nitrogen. The column ends are then flame sealed to protect the column for prolonged storage. Alternatively, the etched columns may be coated and used immediately for chromatography by deactivating and coating the inner bore of the capillary with stationary phase.

Various applicable coating procedures are well known and usually preceded by acid leaching of the etched surface of the capillary with heated, concentrated hydrochloric acid, for a prolonged period of time, e.g., as described by Grob et al., Chromatographia, 10, 181—187; followed by surface deactivation and coating with stationary phase. Highly efficient and thermally stable capillary columns are surface deactivated and coated by using apolar and mixed apolar/polar stationary phase coatings as now described.

Specifically, the chromatographic column capillaries of the invention are prepared from glass capillary tubes, the inner surface of which is etched, and, eventually, acid-activated, by:

(a) contacting the etched and, eventually, acid-activated surface with $SiCl_4$ vapor, thereby causing substantial chlorosilylation of said surface,

(b) contacting the chlorosilylated surface with water vapor until essentially all of the chlorosilyl groups have been hydrolyzed to hydroxysilyl groups,

(c) contacting the hydrolyzed surface with excess of a diorganodichlorosilane vapor of the formula RR' $SiCl_2$ where RR' each represent a methyl, ethyl, vinyl, or allyl radical or a mono-chlorinated derivative thereof, to react at least the major portion of the hydroxysilyl groups to form corresponding diorganochlorosilyl groups,

(d) contacting the reacted surface from step (c) with water vapor until essentially all of the diorganochlorosilyl groups have been hydrolyzed to diorganohydroxysilyl groups,

(e) contacting the hydrolyzed surface of step (d) with $SiCl_4$ vapor to react substantially all of said diorganohydroxysilyl groups to form diorgano-silyloxychlorosilyl groups,

(f) repeating steps b-d not less than once, and

(g) contacting the final hydrolyzed surface from step (f) with a triorganochlorosilane vapor of the formula RR'R'' $SiCl$ where RR'R'' each represent a methyl, ethyl, vinyl, or allyl radical, or a mono-chlorinated derivative thereof, to convert substantially all diorganohydroxysilyl groups to corresponding triorganosilyloxydiorganosilyl groups.

Any of the individual reaction and hydrolysis steps may be repeated one or more times to obtain essentially complete reaction of the affected hydroxyl and chloro functional groups, using reaction temperatures within the range of from 0—300°C. After the series of dichlorosilane reaction-hydrolysis sequences and the final reaction with chlorosilane, the inner surface of the capillary tubing has been effectively deactivated by a covering of thin film of siloxane polymer molecules, each chemically bonded at one end to the capillary surface and the free ends capped by triorganosilyloxy terminal groups. After appropriate flushing and drying steps, the deactivated surface is then coated by conventional means with a film of an appropriate apolar liquid polymer between about 0.1 to 10 micrometres uniform thickness.

Further details of an improved coated chromatography column capillaries of the invention and process for preparing same are set forth hereinafter and with reference to the accompanying drawing, in which:

Figure 1 illustrates a chromatogram developed using the improved chromatography column capillary of the invention for analysis of a sample of mixed phenols; and

Figure 2 is an illustration of another chromatogram developed using a modified version of the chromatography column capillary of the invention for the analysis of Aroclor® 1242 (a sample matrix of mixed polychlorinated biphenyls).

The etched glass column surface is as a preparatory step, acid-activated by exhaustive treatment with concentrated aqueous hydrochloric acid at or near its boiling point for an extended period of time, for example, 24—48 hours. Such hot acid leaching is a known procedure that accomplishes the removal of undesirable cationic species such as $Na_2O$, $K_2O$, $Al_2O_3$, $B_2O_3$, CaO, and other metal oxides and that also produces an increased concentration of silanol groups, i.e., hydroxyl groups, bonded to the exposed silica surface. In this way, a more uniform coating of bonded siloxane polymer molecules on the silica surface is attainable by the series of reactions constituting the deactivation process and consequently a more thorough uniform deactivation of the surface is produced.

Hydrochloric acid leaching (acid-activation) is preferably followed by passing a stream of dry nitrogen through the tube to promote drying, while heating the capillary via, e.g., an infrared lamp, a known procedure referred to as "hydro-acidic thermal treatment". Hydro-acidic thermal treatment of the glass surface permits a beneficial increase in surface silanol density under generally reproducible conditions.

The surface silanol concentration is thereafter further increased substantially by step (a) of the above-described process wherein $SiCl_4$ vapor is contacted with the acid-activated silica surface, thereby causing reaction of the $SiCl_4$ with surface hydroxyl groups to make chlorosilyloxy moieties which are then converted to corresponding hydroxysilyloxy moieties by contact with water vapor in step (b). The reaction with $RR'SiCl_2$ vapor, the aqueous hydrolysis of the resulting disubstituted chlorosilyl end groups, the further branching reaction with $SiCl_4$ vapor and subsequent aqueous hydrolysis step then follow as set forth with the final capping reaction with $RR'R''SiCl$ to finish the siloxane polymer chain growth.

These reactions of the functional groups attached to the silica surface with vaporous reactants are preferably carried out by using an inert carrier gas such as nitrogen saturated with the vapor by bubbling it through the liquid chlorosilane or water. Optimum results are obtained by introducing the reactant vapor into the capillary tube at about room temperature and passing the vapor-gas mixture through for about 1—10 minutes, then flame-sealing the column ends and heating the sealed system for at least 0.1—0.2 hour at one or more temperatures in the range preferably from about 100°C to 300°C. This procedure may be repeated about 1—3 times for each reaction step to assure as complete a reaction as possible before proceeding to the next step.

The final capping reaction with $RR'R''SiCl$ is preferably preceded by multiple hydrolyses with water vapor to insure complete hydrolysis of any residual chlorosilyl groups. Usually, about 3—5 such hydrolysis steps are found to be necessary before no traces of HCl can be detected when the hydrolyzed column is flushed with dry nitrogen. After treatment with $RR'R''SiCl$ vapor as specified above, the column is preferably flushed again with dry nitrogen or other inert gas and rinsed by passing through a low boiling inert solvent such as methylene chloride or pentane thereby dissolving and removing any unbonded siloxane polymer. The rinsed column is then flushed with nitrogen, subjected to a final hydrolysis step and a reaction with $RR'R''SiCl$ vapor as before to complete this preferred capping reaction procedure prior to coating the deactivated column surface with a liquid stationary phase.

Preferred end capping silanes of the formula $RR'R''SiCl$ include trimethylchlorosilane, (a highly preferred species), and additionally dimethylvinylchlorosilane, dimethylallylchlorosilane, and dimethylethylchlorosilane. Preferred reactants of the formula $RR'SiCl_2$ include dimethyldichlorosilane (a highly preferred species) and additionally methylvinyldichlorosilane, methylethyldichlorosilane, diethyldichlorosilane, and methylallyldichlorosilane. In addition, dichlorosilane and chlorosilane reactants broadly within the scope of the invention include those with organo methyl, ethyl, vinyl and allyl radicals, as described, including such radicals nondetrimental substituted with chlorine, as for example, methylchloromethyldichlorosilane and chloromethyldimethylchlorosilane.

Stationary phase

The above-described deactivation procedure is specifically designed to provide optimum gas chromatographic properties in a column coated with an apolar stationary liquid phase. As a practical definition, "apolar" stationary phases have a value for the sum of the McReynolds' constants (*J. Chromatogr. Sci., 8*, 685—691, 1970) for benzene, butanol, 2-pentanone, nitropropane, and pyridine of ~423 or less. The following list are examples of common apolar phases contemplated for use in the invention is given for illustrative purposes:

Squalane (hydrocarbon)
Nujol (hydrocarbon)
Hexatriacontane (hydrocarbon)
Kovat's Hydrocarbon
SF-96 (methyl silicone)
DC-330 (methyl silicone)
Convoil 20
M&B Oil (methyl silicone)
SE-30 (methyl silicone)
E-301 (methyl silicone)
UC-L46 (methyl silicone)
OV-1 (methyl silicone)
OV-101 (methyl silicone)
SE-31 (methyl silicone)
W-982 (methyl silicone)
DC-200 (methyl silicone)
SE-33 (methyl silicone)
SP-2100 (methyl silicone)
DC-11 (methyl silicone)
DC-410 (methyl silicone)
Montan Wax
Versilube F-50 (methyl, 10% trichlorophenyl silicone)
Polybutene 32 (hydrocarbon)
Polybutene 128 (hydrocarbon)
DC-510 (methyl silicone)
Apiezon M (hydrocarbon)
Apiezon L (hydrocarbon)
SE-52 (methyl, 5% phenyl silicone)
DC-560 (methyl, chlorophenyl silicone) SP-400 (methyl, chlorophenyl silicone)
SE-54 (methyl, 1% vinyl, 5% phenyl silicone)
DC-556
Apiezon J (hydrocarbon)
Apiezon N (hydrocarbon)
Apiezon T (hydrocarbon)
Butyl stearate (hydrocarbon ester)
OV-3 (methyl, 10% phenyl silicone)

In many cases the defined surface deactivation procedure is compatible with mixed stationary phases, where the mixture may contain up to approximately 20 percent by weight of a more polar stationary phase in the primary apolar phase. Examples of such polar stationary phase components (illustrative only and not comprehensive) are:

Poly S-179 (polyphenylsulfone)
Poly S-176 (polyphenylsulfone)
Dexsil® 400 (methyl phenyl carborane silicone)
Dexsil® 410 (methyl cyanoethyl carborane silicone)
Poly MPE (polyphenyl ether)
PPE-20 (polyphenyl ether)
PPE-21 (polyphenyl ether)
BMBT (N,N' - bis(paramethoxylbenzylidene) - a,a' - bi - para - toluidene)
BBBT (N,N' - bis(parabutoxybenzylidene) - a,a' - bi - para - toluidene)
BPhBT (N,N' - bis(paraphenylbenzylidene) - a,a' - bi - para - toluidene)

The apolar liquid coating is applied by conventional means. Preferably, the cooled and nitrogen-flushed column is filled with a solution of the coating in a low boiling inert solvent such as benzene, pentane, methylene chloride, or acetone and then evaporating the solvent. Stationary phase coatings of about 0.1—2 micron thickness are ordinarily preferred. The actual thickness of the chemically bonded methylsiloxane polymer deactivating film applied by the procedure of this invention is not known but is believed to be of the order of 0.01—0.1 percent of the thickness of the stationary phase film.

Example 3
Etching and leaching procedures

A glass capillary column of 0.40 mm I.D. and about 45 meters long was prepared by drawing commercially available Pyrex borosilicate tubing which had been rinsed with dilute aqueous hydrofluoric acid, deionized water, methanol, and methylene chloride, then air dried prior to drawing. The inside surface of the column was etched by pushing a saturated solution of $NH_4HF_2$ in methanol (about 4 percent by weight) through the column at about 25°C and at a rate of about 1—10 ml/hr for 20 hours using nitrogen pressure. The column was then rinsed with about five times its volume of methanol (pumped through at 0.5—1 ml/min), water was introduced into the methanol feed in gradually increasing proportions via a 10 ml mixing vessel between the pump and column inlet until the rinse feed was pure water (about ten minutes) and the column was rinsed with five times its volume of water, and finally the column was rinsed again with methanol and dried with nitrogen.

The etched capillary column thereby obtained was leached by passing concentrated HCl through it at 1—10 ml/hr for about 24 hours at 60—95°C using an infrared lamp for heat. The column was then purged with dry nitrogen at 68950 Pa (10 p.s.i.) under the heat lamp until visually dry and the etched inside surface was deactivated according to the procedure described below. In the various steps, dry nitrogen was supplied at 68950 Pa (10 p.s.i.) and saturated at 25°C with a reagent as necessary by using a bubbler bottle.

(1) Chlorosilylation

The column was filled with nitrogen saturated with $SiCl_4$ for about 3 minutes, then the ends were flame-sealed and the column was heated at 180°C for about 30 minutes.

(2) Hydrolysis

The column was cooled to 25°C and the sealed ends broken open. The column was then purged with dry $N_2$ for about 5 minutes, followed with water-saturated $N_2$ for about 10 minutes. The ends were then flame-sealed again and the column was heated for ten minutes at 150°C.

(3) Reactions with dimethyldichlorosilane (DMCS)

Nitrogen saturated with $(CH_3)_2SiCl_2$ vapor was passed through the cooled and opened column for 8 minutes, followed by water-saturated nitrogen for 10 minutes, and $(CH_3)_2SiCl_2$-saturated nitrogen for 8 minutes. The columns ends were then flame-sealed and the column was heated for 60 minutes at 180°C. The column was then cooled to 25°C and the ends broken open. Nitrogen saturated with water vapor was passed through the column for 10 minutes, followed by nitrogen saturated with $(CH_3)_2SiCl_2$ for 5 minutes and finally water-saturated nitrogen for 10 minutes. The ends were flame-sealed and the column was heated at 180°C for 10 minutes.

(4) Chlorosilylation and hydrolysis

After cooling to 25°C, the column ends were broken open and the column was purged with nitrogen for ten minutes. Nitrogen saturated with $SiCl_4$ was passed through the column for 5 minutes. The ends of the column were flame-sealed and the column was heated at 180°C for about 30 minutes. The column was again cooled to room temperature and purged with nitrogen for 5 minutes, followed by passing water-saturated nitrogen through the column for 10 minutes. The column ends were sealed, and the column was heated for 10 minutes at 150°C.

(5) Reactions with dimethyldichlorosilane (DMCS)

Nitrogen saturated with $(CH_3)_2SiCl_2$ vapor was passed through the cooled and opened column for 5 minutes, followed by water-saturated nitrogen for 10 minutes, and $(CH_3)_2SiCl_2$-saturated nitrogen for 5 minutes. The column ends were then flame-sealed and the column was heated 10 minutes at 180°C. After cooling and opening, water-saturated nitrogen was passed through the column for 10 minutes, followed by $(CH_3)_2SiCl_2$-saturated nitrogen for 5 minutes, and water-saturated nitrogen for 10 minutes. The column ends were then flame-sealed and the column was heated 10 minutes at 180°C.

**(6) Chlorosilylation and hydrolysis**

Step (4) was repeated except that the column was heated for 10 minutes at 180°C after $SiCl_4$ vapor was passed therethrough and the ends were sealed.

**(7) Reactions with $(CH_3)_2SiCl_2$ (DMCS)**

Step (5) was repeated except that the final heating at 180°C after the last passing of water-saturated nitrogen was continued overnight.

**(8) Capping with trimethylchlorosilane (TMCS)**

The cooled and opened column was purged with dry nitrogen for 10 minutes, followed by passing nitrogen saturated with $(CH_3)_3SiCl$ vapor through the column for 5 minutes. The ends of the column were flame-sealed, and the column was heated at 200°C for 10 minutes. The column was then cooled to room temperature, purged for 10 minutes with nitrogen, and rinsed with two 5 ml portions of methylene chloride. After passing nitrogen through the column until dryness was observed, nitrogen saturated with $(CH_3)_3SiCl$ vapor was passed through the column for 8 minutes. The ends of the column were flame-sealed and the column was heated for 10 minutes at 180°C, and for 1 hour at 280°C.

**(9) Static coating**

The cooled column was purged with dry nitrogen for about 30 minutes, then pressure filled with 0.35 volume percent OV-73 (a phenyl methyl silicone gum wherein the phenyl groups in the polymer molecule constitute 5.5 percent of the total organic substituents, manufactured by Ohio Valley Silicones) in pentane. One end of the column was sealed with glue and the other end was connected to a vacuum pump for vacuum evaporation of the pentane solvent while the body of the column was immersed in a water bath held at 33°C. When evaporation was completed, the column was installed in a gas chromatograph and conditioned by treatment overnight with helium at 250°C.

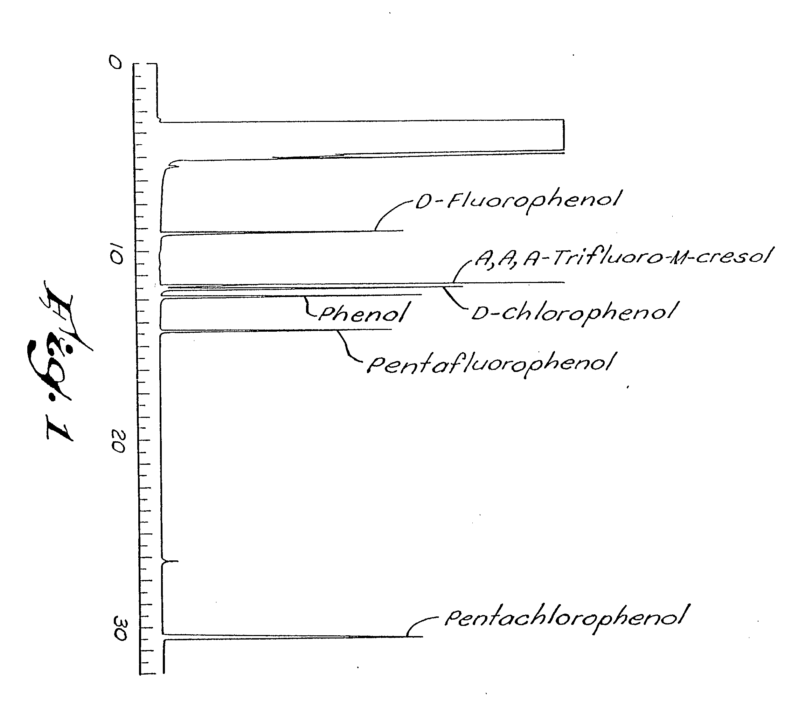

Figure 1 shows the chromatogram of a sample of mixed phenols obtained by use of this column. Surface deactivation was excellent as the column efficiency approached the theoretical limit. The column length used was 37 meters with a polysiloxane inner coating of 0.35 μm total thickness.

In the following example, the procedural steps described in Example 3 are indicated by an abbreviated notation. Thus, successive passage of $(CH_3)_2SiCl_2$ (DMCS)-saturated nitrogen, heating of the sealed and vapor-filled column at an elevated temperature, passage of wet nitrogen through the cooled column, and heating of the sealed and wet nitrogen-filled column are indicated as follows:

DMCS (10 min)→220°C (2 hrs)
$H_2O$ (30 min)→220°C (1 hr)

In all of these steps, as in Example 3, nitrogen at 68950 Pa (10 pounds) gauge pressure was bubbled through water or a chlorosilane and the saturated nitrogen stream was passed through the column at room temperature (about 25°C), then the column ends were flame-sealed for the heating at an elevated temperature after which the column was cooled and the ends broken off for further treatments.

**Example 4**

A borosilicate glass column of 0.60 mm inside diameter and about 35 meters long was made and the inside surface etched with a solution of $NH_4HF_2$ in methanol and leached with hydrochloric acid as described in Example 2. The dried column was then coated by the following combination of steps indicated by the notation used in Example 3.

**(1) Chlorosilylation and hydrolysis**
$SiCl_4$ (5 min)→250°C (2.5 hrs)
$N_2$ purge (10 min)
$H_2O$ (10 min)→150°C (10 min)
$H_2O$ (10 min)→150°C (10 min)

**(2) Reactions with DMCS**
DMCS (5 min)→150°C (10 min)→250°C (10 min)
$H_2O$ (10 min)→150°C (10 min)
$H_2O$ (10 min)→150°C (10 min)
DMCS (5 min)→150°C (10 min)→250°C (10 min)
$H_2O$ (10 min)→150°C (10 min)
$H_2O$ (10 min)→150°C (10 min)

**(3) Chlorosilylation and hydrolysis**
$N_2$ purge (10 min)
$SiCl_4$ (5 min)→150°C (10 min)→250°C (10 min)
$N_2$ purge (10 min)
$H_2O$ (10 min)→150°C (10 min)
$H_2O$ (10 min)→150°C (10 min)

**(4) Reactions with DMCS**
DMCS (5 min)→150°C (10 min)→250°C (10 min)
$H_2O$ (10 min)→150°C (10 min)
$H_2O$ (10 min)→150°C (10 min)
DMCS (5 min)→150°C (10 min)→250°C (20 min)
$H_2O$ (10 min)→150°C (10 min)
$H_2O$ (10 min)→150°C (10 min)
$H_2O$ (10 min)→150°C (10 min)
$H_2O$ (10 min)→150°C (10 min)

**(5) Capping with TMCS**
$N_2$ purge (10 min)
TMCS (5 min)→150°C (10 min)→250°C (10 min)
$N_2$ purge (10 min)
One 7 ml $CH_2Cl_2$ rinse
$N_2$ purge until dry
$H_2O$ (10 min)→150°C (10 min)→200°C (10 min)
$N_2$ purge (10 min)
TMCS (5 min)→150°C (10 min)→250°C (30 min)
$N_2$ purge (10 min)

(6) Static coating

The column was filled with a 0.27 percent by volume $CH_2Cl_2$ solution of a mixture of 9 parts by weight OV-73* to one part Poly S-179**. The pentane solvent was removed and the column conditioned in helium essentially as described in Example 2 to yield a column having a total polymer coating thickness of 0.40 micron.

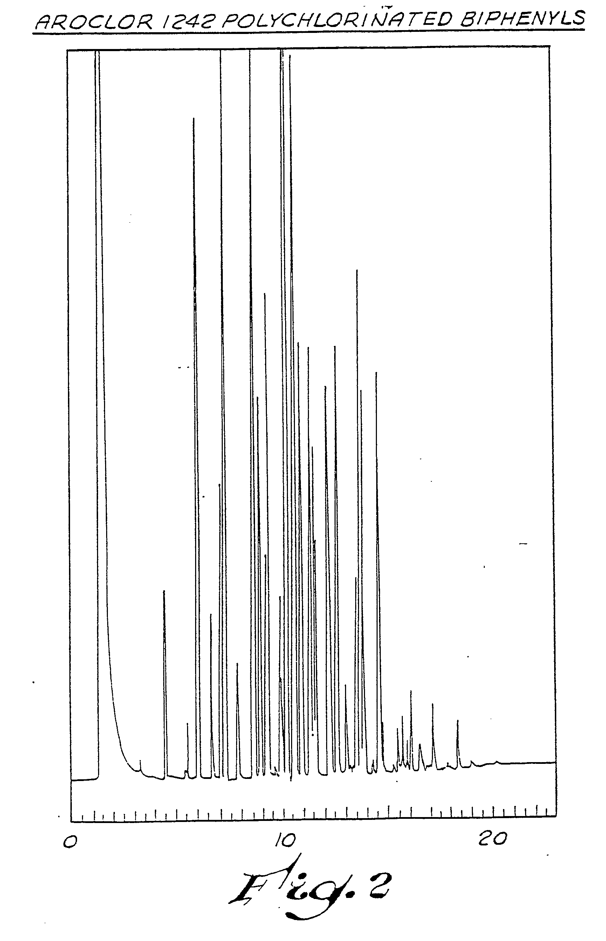

Figure 2 shows the chromatogram of a sample of Aroclor 1242 (mixed polychlorinated biphenyls). Column length was about 27 meters.

## Claims

1. A method for etching the inner surface of a glass capillary column for chromatography, and in preparation for deactivating and coating the inner surface of the capillary with stationary phase, which comprising the steps of:

(a) flowing through the bore of the capillary a liquid etching solution of ammonium bifluoride dissolved in an organic solvent, said organic solvent being water miscible, able to dissolve a reactive amount of ammonium bifluoride $(NH_4HF_2)$ and relatively unable to dissolve the reaction product $(NH_4)_2SiF_6$,

(b) continuing step (a) for a sufficient time to produce a frosted surface.

(c) thereafter adding a rinse solution of a liquid organic solvent to the bore of the capillary,

(d) without segmenting (that is, avoiding the introduction of air bubbles which would cause capillary plugging) the flow of the rinse solution to the capillary, adding thereto water, thereby rinsing the capillary with a rinse solution of the liquid organic solvent mixed with water, and

(e) without segmenting the flow of the rinse solution to the capillary, reducing or terminating the addition of the organic solvent to produce a final liquid rinse of the capillary wherein the rinse solution is an effective amount of water sufficient to essentially completely remove the etchant reaction products adhering to the wall of the capillary to produce a uniformly and finely etched surface.

2. The method of Claim 1, wherein the organic solvent is methanol.

3. The process of Claim 1 including the step of deactivating, the inner surface of the capillary by:

(a) contacting the etched and, eventually, acid-activated surface with $SiCl_4$ vapor thereby causing substantial chlorosilylation of said surface.

(b) contacting the chlorosilylated surface with water vapor until essentially all of the chlorosilyl groups have been hydrolyzed to hydroxysilyl groups,

(c) contacting the hydrolyzed surface with an excess of a diorganodichlorosilane vapor of the formula $RR'SiCl_2$ where RR' each represent a methyl, ethyl, vinyl, or allyl radical, or a mono-chlorinated derivative thereof, to react at least a major portion of the hydroxysilyl groups to form corresponding diorganochlorosilyl groups,

(d) contacting the reacted surface from step (c) with water vapor until essentially all of the diorganochlorosilyl groups have been hydrolyzed to diorganohydroxysilyl groups,

(e) contacting the hydrolyzed surface of step (d) with $SiCl_4$ vapor to react substantially all of said diorganohydroxysilyl groups to form diorgano-silyloxychlorosilyl groups,

(f) repeating steps b-d not less than once, and

(g) contacting the final hydrolyzed surface from step (f) with a triorganochlorosilane vapor of the formula RR'R''SiCl where RR'R'' each represent a methyl, ethyl, vinyl or allyl radical, or a mono-chlorinated derivative thereof, to convert substantially all diorganohydroxysilyl groups to corresponding triorganosilyloxydiorganosilyl groups.

4. The process of Claim 3 wherein the deactivated column surface is coated with a film of at least about 80 percent by weight apolar liquid polymer as a stationary phase.

5. The process of Claim 4 wherein the apolar polymer is a methyl silicone polymer.

6. The process of Claim 3, wherein steps (a) through (g) are conducted at a temperature of from 0° to 300°C, wherein the hydrolyzed surface of step (b) is contacted with excess dimethyldichlorosilane vapor for a time sufficient to react at least the major portion of the hydroxysilyl groups to form corresponding dimethylchlorosilyl groups, wherein the reacted surface from step (c) is contacted with water vapor until essentially all of the dimethylchlorosilyl groups have been hydrolyzed to dimethylhydroxysilyl groups, wherein the hydrolyzed surface from step (d) is contacted with $SiCl_4$ vapor for a time sufficient to react substantially all of the dimethylhydroxysilyl groups to form dimethylsilyloxy-chlorisilyl groups, and wherein the final hydrolyzed surface from step (f) is contacted with trimethylchlorosilane vapor for a time sufficient to convert substantially all dimethylhydroxysilyl groups to corresponding trimethylsilyloxy-dimethylsilyl groups.

7. A deactivated capillary column formed by the process of any one of claims 3 to 6, the inner surface of which is deactivated by a covering of thin film of siloxane polymer molecules, each chemically bonded at one end to the capillary surface and the free ends capped by triorganosilyloxy terminal groups.

8. A process for making a chromatographic separation comprising mixing the vapor of a substance having multiple components with an inert carrier gas and passing the gaseous mixture through the chromatographic column made by the process of Claim 4.

9. In an apparatus for use in chromatographic separations comprising a capillary glass or fused silica tube having a thin film of a stationary liquid phase supported on the inner surface of the tube, the improvement wherein the column is made by the process of Claim 4.

* Polymer defined in Example 3.
** Polyphenylsulfone

## Patentansprüche

1. Verfahren zum Ätzen der inneren Oberfläche einer Glaskapillarkolonne für die Chromatographie und Vorbereiten zur Desaktivierung und Beschichtung der Innenoberfläche der Kapillaren mit einer stationären Phase, gekennzeichnet durch die Schritte:

(a) Hindurchleiten einer flüssigen Ätzlösung durch die Bohrung der Kapillare aus in einem organischen Lösungsmittel gelösten Ammoniumbifluorid, wobei das organische Lösungsmittel in der Lage ist, eine reaktionsfähige Menge an Ammoniumbifluorid (NH$_4$HF$_2$) zu lösen und ein relativ schlechtes Lösungsmittel für das Reaktionsprodukt (NH$_4$)$_2$SiF$_6$ ist,

(b) Fortsetzen des Schrittes (a) für eine Zeit, die ausreicht, eine mattierte Oberfläche zu erzeugen,

(c) anschließendes Einbringen einer Waschlösung aus einem organischen Lösungsmittel in die Bohrung der Kapillare,

(d) Zugeben von Wasser zur Flüssigkeit ohne Unterbrechung des Stromes der Waschflüssigkeit in der Kapillare, so daß das Einführen von Luftblasen, die die Kapillare verstopfen würden, vermieden wird, so daß die Kapillare mit einer Waschlösung aus einer Mischung von flüssigem organischen Lösungsmittel gemischt mit Wasser gespült wird und

(e) Reduzieren oder Beenden der Zugabe von organischem Lösungsmittel zur Waschflüssigkeit ohne Unterbrechen des Stromes der Waschflüssigkeit, für die Endwäsche der Kapillare mit einer Waschflüssigkeit aus einer wirksamen Menge an Wasser, um die an der Kapillarwand haftenden Reaktionsprodukte des Ätzens im wesentlichen vollständig zu entfernen und eine gleichmäßig und endgültig geätzte Oberfläche auszubilden.

2. Verfahren nach Anspruch 1, dadurch gekennzeichnet, daß das organische Lösungsmittel Methanol ist.

3. Verfahren nach Anspruch 1 einschließlich des Schrittes der Desaktivierung der inneren Oberfläche der Kapillare, gekennzeichnet durch:

(a) in Berührung bringen der geätzten und eventuell säureaktivierten Oberfläche mit SiCl$_4$-Dampf, so daß die Oberfläche im wesentlichen chlorsilyliert wird,

(b) in Berührung bringen der chlorsilylierten Oberfläche mit Wasserdampf bis im wesentlichen alle Chlorsilylgruppen zu Hydroxysilylgruppen hydrolysiert sind,

(c) in Berührung bringen der hydrolysierten Oberfläche mit einem Überschuß eines Diorganodichlorsilandampfes der Formel RR'SiCl$_2$, in der RR' jeweils Methyl-, Ethyl-, Vinyl- oder Allylreste oder deren monochlorierte Derivate sind, um mindestens die Hauptmenge der Hydroxysilylgruppen in die korrespondierenden Diorganochlorsilylgruppen umzuwandeln,

(d) in Berührung bringen der in Schritt (c) umgewandelten Oberfläche mit Wasserdampf bis im wesentlichen alle Diorganochlorsilylgruppen zu Diorganohydroxysilylgruppen hydrolysiert sind,

(e) in Berührung bringen der in Schritt (d) hydrolysierten Oberfläche mit SiCl$_4$-Dampf, um im wesentlichen alle Diorganohydroxysilylgruppen in Diorganosilyloxychlorsilylgruppen umzuwandeln,

(f) Wiederholen der Schritte b-d nicht weniger als einmal und

(g) in Berührung bringen der endgültig hydrolysierten Oberfläche des Schrittes (f) mit Triorganochlorsilandampf der Formel RR'R''SiCl, in der RR'R'' jeweils Methyl-, Ethyl-, Vinyl- oder Allylreste oder deren monochlorierte Derivate sind, um im wesentlichen alle Diorganohydroxysilylgruppen in die korrespondierende Triorganosilyloxydiorganosilylgruppen umzuwandeln.

4. Verfahren nach Anspruch 3, dadurch gekennzeichnet, daß die desaktivierte Kolonnenoberfläche als stationäre Phase mit einem Film aus mindestens etwa 80 Gewichtsprozent apolaren flüssigem Polymer beschichtet ist.

5. Verfahren nach Anspruch 4, dadurch gekennzeichnet, daß das apolare Polymer ein Methylsilikonpolymer ist.

6. Verfahren nach Anspruch 3, dadurch gekennzeichnet, daß die Schritte (a) bis (g) bei einer Temperatur von 0°C bis 300°C ausgeführt werden, wobei die in Schritt (b) hydrolysierte Oberfläche mit einem Überschuß an Dimethyldichlorsilandampf für eine Zeit in Berührung gebracht wird, die ausreicht, mindestens den Hauptteil der Hydroxysilylgruppen in die korrespondierenden Dimethylchlorsilylgruppen umzuwandeln, wobei die in Schritt (c) umgesetzte Oberfläche mit Wasserdampf in Berührung gebracht wird, bis im wesentlichen die gesamten Dimethylchlorsilylgruppen in Dimethylhydroxysilylgruppen hydrolysiert sind, wobei die in Schritt (d) hydrolysierte Oberfläche mit SiCl$_4$-Dampf für eine Zeit in Berührung gebracht wird, die ausreicht, im wesentlichen alle Dimethylhydroxysilylgruppen in die korrespondierenden Dimethylsilyloxychlorsilylgruppen umzusetzen und wobei die in Schritt (f) endgültig hydrolysierte Oberfläche mit Trimethylchlorsilandampf für eine Zeit in Berührung gebracht wird, die ausreicht, um im wesentlichen alle Dimethylhydroxysilylgruppen in die korrespondierenden Trimethylsilyloxydimethylsilylgruppen umzuwandeln.

7. Desaktivierte Kapillarkolonne hergestellt nach jedem der Ansprüche 3 bis 6, dadurch gekennzeichnet, daß die desaktivierte Oberfläche mit einem dünnen Film von Siloxypolymermolekülen bedeckt ist, die jeweils mit einem Ende chemisch an die Kapillaroberfläche gebunden sind und deren freie Enden mit Triorganosilyloxyendgruppen verkappt sind.

8. Verfahren zum chromatographischen Trennen durch Mischen des Dampfes eines Vielkomponentengemisches mit einem inerten Trägergas und Hindurchleiten der gasförmigen Mischung durch eine Chromatographiekolonne, die nach dem Verfahren von Anspruch 4 hergestellt ist.

9. Vorrichtung zur Verwendung für chromatographische Trennungen mit einer Glaskapillare oder einem Rohr aus geschmolzenem Siliciumdioxid, die einen dünnen Film einer flüssigen stationären Phase auf der inneren Oberfläche des Rohres trägt, dadurch gekennzeichnet, daß die Kolonne nach dem Verfahren von Anspruch 4 hergestellt ist.

**Revendications**

1. Procédé de décapage de la surface interne d'une colonne capillaire en verre pour la chromatographie, et pour la préparation pour la désactivation et le revêtement de la surface interne du capillaire avec une phase stationnaire, qui comprend les étapes consistant à:

(a) faire s'écouler dans le canal du capillaire une solution de décapage liquide de bifluorure d'ammonium dissous dans un solvant organique, ce solvant organique étant miscible à l'eau, capable de dissoudre une quantité réactive de bifluorure d'ammonium ($NH_4HF_2$) et relativement incapable de dissoudre le produit de la réaction $(NH_4)_2SiF_6$,

(b) continuer l'étape (a) pendant un temps suffisant pour produire une surface dépolie,

(c) ajouter ensuite une solution de rinçage d'un solvant organique liquide dans le canal du capillaire,

(d) sans segmenter l'écoulement de la solution de rinçage dans le capillaire, c'est-à-dire en évitant l'introduction de bulles d'air qui provoquerait un colmatage du capillaire, y ajouter de l'eau, rinçant ainsi le capillaire avec une solution de rinçage du solvant organique liquide mélangé à de l'eau, et

(e) sans segmenter l'écoulement de la solution de rinçage dans le capillaire, réduire ou terminer l'addition du solvant organique pour produire un rinçage liquide final du capillaire, dans lequel la solution de rinçage est une quantité efficace d'eau suffisante pour éliminer sensiblement complètement les produits de réaction du réactif de décapage adhérant à la paroi du capillaire en donnant une surface uniformément et finement décapée.

2. Procédé selon la revendication 1, dans lequel le solvant organique est le méthanol.

3. Procédé selon la revendication 1, comprenant l'étape consistant à désactiver la face interne du capillaire:

(a) en mettant en contact la surface décapée, et éventuellement activée à l'acide, avec de la vapeur de $SiCl_4$, provoquant ainsi une chlorosilylation substantielle de cette surface,

(b) en mettant en contact la surface chlorosilylée avec de la vapeur d'eau jusqu'à ce que sensiblement tous les groupes chlorosilyle aient été hydrolysés en groupes hydroxysilyle,

(c) en mettant en contact la surface hydrolysée avec un excès de vapeur d'un diorganodichlorosilane répondant à la formule $RR'SiCl_2$, dans laquelle RR' représentent chacun un radical méthyle, éthyle, vinyle ou allyle ou un dérivé monochloré de ceux-ci, pour faire réagir au moins une partie prépondérante des groupes hydroxysilyle pour former des groupes diorganochlorosilyle correspondants,

(d) en mettant en contact la surface ayant réagi de l'étape (c) avec de la vapeur d'eau jusqu'à ce que pratiquement tous les groupes diorganochlorosilyle aient été hydrolysés en groupes diorganohydroxysilyle,

(e) en mettant en contact la surface hydrolysée de l'étape (d) avec de la vapeur de $SiCl_4$ pour faire réagir sensiblement tous ces groupes diorganohydroxysilyle pour former des groupes diorganosilyloxychlorosilyle,

(f) en répétant les étapes (b)—(d) au moins une fois, et

(g) en mettant en contact la surface hydrolysée finale de l'étape (f) avec de la vapeur d'un triorganochlorosilane répondant à la formule RR'R'' $SiCl$, dans laquelle RR'R'' représentent chacun un radical méthyle, éthyle, vinyle ou allyle, ou un dérivé monochloré de ceux-ci, pour transformer sensiblement tous les groupes diorganohydroxysilyle en les groupes triorganosilyloxydiorganosilyle correspondants.

4. Procédé selon la revendication 3, dans lequel la surface de la colonne désactivée est revêtue d'une pellicule d'au moins environ 80% en poids d'un polymère liquide apolaire comme phase stationnaire.

5. Procédé selon la revendication 4, dans lequel le polymère apolaire est un polymère de méthyl silicone.

6. Procédé selon la revendication 3, dans lequel les étapes (a) à (g) sont effectuées à une température de 0°C à 300°C, dans lequel la surface hydrolysée de l'étape (b) est mise en contact avec un excès de vapeur de diméthyldichlorosilane pendant un temps suffisant pour faire réagir au moins la majeure partie des groupes hydroxysilyle pour former des groupes diméthylchlorosilyle correspondants, dans lequel la surface ayant réagi de l'étape (c) est mise en contact avec de la vapeur d'eau jusqu'à ce que sensiblement tous les groupes diméthylchlorosilyle aient été hydrolysés en groupes diméthylhydroxysilyle, dans lequel la surface hydrolysée de l'étape (d) est mise en contact avec de la vapeur de $SiCl_4$ pendant un temps suffisant pour faire réagir sensiblement tous les groupes diméthylhydroxysilyle pour former des groupes diméthylsilyloxychlorosilyle, et dans lequel la surface hydrolysée finale de l'étape (f) est mise en contact avec de la vapeur de triméthylchlorosilane pendant un temps suffisant pour transformer sensiblement tous les groupes diméthylhydroxysilyle en les groupes triméthylsilyloxydiméthylsilyle correspondants.

7. Colonne capillaire désactivée formée par le procédé selon l'une des revendications 3 à 6, dont la surface interne est désactivée par couverture d'une pellicule fine de molécules de polymère de siloxane, chacune d'elles étant chimiquement liée à une extrémité à la surface du capillaire et les

19 0 082 079 20

extrémités libres étant coiffées par des groupes terminaux triorganosilyloxy.

8. Procédé de séparation chromatographique consistant à mélanger la vapeur d'une substance ayant des constituants multiples avec un gaz porteur inerte et à faire passer le mélange gazeux à travers la colonne chromatographique fabriquée par le procédé selon la revendication 4.

9. Dans un appareil destiné à être utilisé dans des séparations chromatographiques, comprenant un tube de verre capillaire ou de silice fondue ayant une pellicule fine d'une phase liquide stationnaire supportée sur la surface interne du tube, le perfectionnement suivant lequel la colonne est fabriquée par le procédé selon la revendication 4.

11

Fig. 1

AROCLOR 1242 POLYCHLORINATED BIPHENYLS

Fig. 2